# EUROPÄISCHE PATENTSCHRIFT

(11) **EP 2 914 945 B1**
(45) Veröffentlichungstag und Bekanntmachung des Hinweises auf die Patenterteilung: **14.09.2016**
(21) Anmeldenummer: 13785453.5
(22) Anmeldetag: 30.10.2013
(51) Int. Cl.: G01M 3/36

(54) **VORRICHTUNG UND VERFAHREN ZUR DICHTHEITSKONTROLLE VON BEHÄLTERN**
DEVICE AND METHOD FOR CHECKING THE LEAK TIGHTNESS OF CONTAINERS
DISPOSITIF ET PROCÉDÉ DE CONTRÔLE D'ÉTANCHÉITÉ DE CONTENANTS

(30) Priorität: 31.10.2012 DE 102012219993
(43) Veröffentlichungstag der Anmeldung: 09.09.2015
(73) Patentinhaber: Stratec Control-Systems GmbH, 75203 Königsbach-Stein (DE)
(72) Erfinder: BERNATH, Christian, 76332 Bad Herrenalb (DE); DIETZ, Gerhard, 76307 Karlsbad (DE); KIRCHGESSNER, Josef, 75217 Birkenfeld (DE); WEIK, Bruno, 75331 Engelsbrand (DE)
(74) Vertreter: Pfiz, Thomas
(86) Internationale Anmeldenummer: PCT/EP2013/072733
(87) Internationale Veröffentlichungsnummer: WO 2014/068009

(56) Entgegenhaltungen:
- WO-A1-2010/005136
- DE-A1- 2 422 526
- DE-A1- 19 648 778
- US-A- 5 230 239

## Beschreibung

Die Erfindung betrifft eine Vorrichtung zur Dichtheitskontrolle bzw. Leckage-Prüfung von Behältern, insbesondere unter Innendruck stehenden PET-Flaschen, mit einem in einer Tastbewegung in Kontakt mit einem verformbaren Behälter bringbaren Tastkörper, einer Antriebseinheit für den Tastkörper und einer mit der Antriebseinheit und/oder dem Tastkörper gekoppelten Messeinrichtung zur Bestimmung der Behälterdichtheit durch Auswertung der Tastbewegung. Die Erfindung betrifft weiter ein entsprechendes Kontrollverfahren.

Aus der WO-A 99/15871 ist eine gattungsgemäße Vorrichtung und ein damit ausführbares Verfahren bekannt, bei dem ein Tastorgan durch einen vorgegebenen Vorschub einer Abtasteinheit gegen eine Behälterwandung angedrückt wird, wobei das Tastorgan über eine Druckfeder an der Abtasteinheit abgestützt ist. Die Endposition des Tastorgans bei der Vorschubbewegung wird dann als Maß für den Gasdruck erfasst. Problematisch erscheinen hier der aufwendige mechanische Aufbau und die erforderliche Positioniergenauigkeit sowie eine mögliche Beeinflussung der Messgenauigkeit durch Toleranzen in den Flaschendurchmessern.

Ausgehend hiervon liegt der Erfindung die Aufgabe zugrunde, die im Stand der Technik bekannten Kontrollvorrichtungen und -verfahren weiter zu verbessern und ein einfach herstellbares und insbesondere auch bei hohem Behälterdurchsatz zuverlässig betreibbares System mit geringem Platzbedarf zu schaffen.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, aus dem Bewegungsprofil des Tastkörpers ein zumindest qualitatives Maß für die Dichtheit abzuleiten. Dementsprechend wird erfindungsgemäß vorgeschlagen, dass an dem Tastkörper ein zur Detektion einer Eigenbewegung angepasstes Sensorelement angeordnet ist, und dass die mit dem Sensorelement gekoppelte Messeinrichtung zur Erfassung des zeitlichen Verlaufs der Tastbewegung ausgebildet ist. Durch die zeitaufgelöste Erfassung eines Bewegungsparameters, wobei ein Weg- Geschwindigkeits- oder Beschleunigungsprofil heranziehbar ist, steht ein hoher Informationsgehalt für die Auswertung zur Verfügung. Dabei ist gewährleistet, dass nur im Kontaktzustand eine Eigenschaft des Messobjekts das Bewegungsprofil beeinflusst. Durch die Möglichkeit einer gezielten Auswertung nur eines Zeitabschnitts ist auch eine hohe Unempfindlichkeit gegenüber Positioniertoleranzen erreichbar. Außerdem kann auch auf eine Zustellbewegung mit aufwendiger Mechanik verzichtet werden.

Eine bevorzugte Ausgestaltung der Erfindung sieht vor, dass das Sensorelement ein Permanentmagnetstück aufweist, und dass das ggf. in Verbindung mit einem ferromagnetischen Kern fest in dem Tastkörper integrierte Permanentmagnetstück mit einer Messspule der Messeinrichtung induktiv gekoppelt ist. Auf diese Weise lässt sich mit geringem Bauaufwand und ohne nennenswerte Beeinflussung des Bewegungsverlaufs eine Eigenbewegung des Tastkörpers relativ zu der Messspule berührungslos erfassen.

Vorteilhafterweise besitzt die Messeinrichtung einen Signalprozessor zur zeitabhängigen Erfassung des Bewegungsprofils, insbesondere des zurückgelegten Wegs und/oder der Geschwindigkeit und/oder der Beschleunigung des Tastkörpers bei der Tastbewegung.

Um ein qualitatives oder quantitatives Prüfergebnis abzuleiten, ist vorteilhafterweise eine Auswerteeinheit zur Bestimmung eines Maßes für die Behälterdichtheit aus dem Zeitverlauf der Tastbewegung vorgesehen.

Eine weitere besonders vorteilhafte Ausgestaltung sieht vor, dass die Antriebseinheit nach einer anfänglichen Beschleunigungsphase zumindest während des Kontakts des Tastkörpers mit dem Behälter abgeschaltet oder von dem Tastkörper entkoppelt ist, so dass das Prallverhalten frei von einer Positionierproblematik untersucht werden kann.

Für eine weitgehende Reduzierung mechanischer Bauelemente ist es auch von Vorteil, wenn die Antriebseinheit mindestens eine Antriebsspule für einen elektromagnetischen Antrieb des Tastkörpers aufweist. Eine weitere Verbesserung sieht vor, dass die Antriebseinheit eine erste Antriebsspule für einen gegen den Behälter gerichteten Vorschub des Tastkörpers und eine zweite Antriebsspule für eine Rückholung des Tastkörpers in seine Ausgangslage aufweist. Zur Realisierung eines elektromagnetischen Aktuators ist es vorteilhaft, wenn der Tastkörper einen in eine Antriebsspule eintauchenden ferromagnetischen Kern aufweist.

Vorteilhafterweise ist der Tastkörper durch einen linear geführten Taststößel gebildet ist, der mit seinem freien Ende gegen den Behälter bewegbar ist, wobei über den Stößelschaft die Aktuierung und Sensierung erfolgen kann. In diesem Zusammenhang ist es auch von Vorteil, wenn der Tastkörper ein in einer Gleitführung gelagertes, nichtmagnetisches Führungsrohr aufweist.

Alternativ kann es auch von Vorteil sein, wenn der Tastkörper nach Art eines Pendels über einen Dreharm in einem Drehlager schwenkbar angeordnet ist. Das Drehlager kann somit außerhalb eines verschmutzungsanfälligen Bereichs angeordnet werden, während das eigentliche Tastorgan am lagerfernen Dreharmende gegen den Behälter geschwenkt wird. Durch ein solches Dreh- bzw. Schwenklager kann auch eine reibungsarmer Bewegungsablauf erreicht werden.

Um einen definierten und schnellen Messablauf sicherzustellen, ist es vorteilhaft, wenn der Bewegungsbereich des Tastkörpers durch mindestens einen Endanschlag begrenzt ist.

Im Hinblick auf ein Verfahren wird die eingangs genannte Aufgabe dadurch gelöst, dass ein Zeitverlauf der Tastbewegung durch ein an dem Tastkörper angeordnetes Sensorelement und eine mit dem Sensorelement gekoppelte Messeinrichtung erfasst wird, und dass durch Auswertung des Zeitverlaufs ein Maß für die Behälterdichtheit bestimmt wird. Von besonderem Vorteil ist es auch, wenn der Tastkörper frei von Antriebskräften gegen den Behälter gelenkt wird.

Im Folgenden wird die Erfindung anhand des in der Zeichnung schematisch dargestellten Ausführungsbeispiels näher erläutert. Es zeigen:
- Fig. 1: ein Blockschaltbild eines Dichtheitskontrollsystems für elastische Behälter mit einer elektromechanischen Abtastvorrichtung;
- Fig. 2: die Abtastvorrichtung mit einem axial beweglichen Taststößel im vertikalen Axialschnitt;
- Fig. 3a und b: den Geschwindigkeitsverlauf des Taststößels beim Abtasten von Behältern mit unterschiedlichem Innendruck;
- Fig. 4: eine weitere Ausführungsform mit einem verschwenkbaren Taststößel in der Draufsicht.

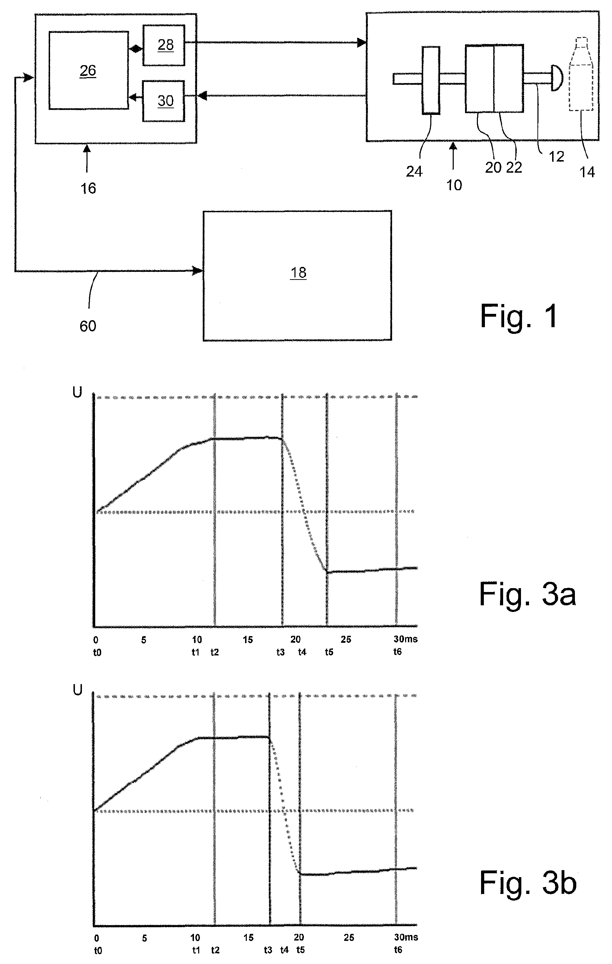

Das in der Zeichnung gezeigte Dichtheitskontrollsystem lässt sich an einer Prüfstation an einer Abfüllanlage beispielsweise für PET-Getränkeflaschen einsetzen, um undichte Flaschen als fehlerhaft zu erkennen und auszusortieren. Zu diesem Zweck umfasst das in Fig. 1 symbolisch veranschaulichte System eine Abtastvorrichtung 10 mit einem linearbeweglichen Taststößel 12 zum Abtasten eines Behälters 14 in einer Tastbewegung, eine Messeinrichtung 16 zur Echtzeitverarbeitung der an dem Taststößel 12 erfassten Bewegungssignale und eine rechnergestützte Bedieneinheit 18 zur Einstellung der Betriebsparameter und Berechnung bzw. Visualisierung von Prüfergebnissen.

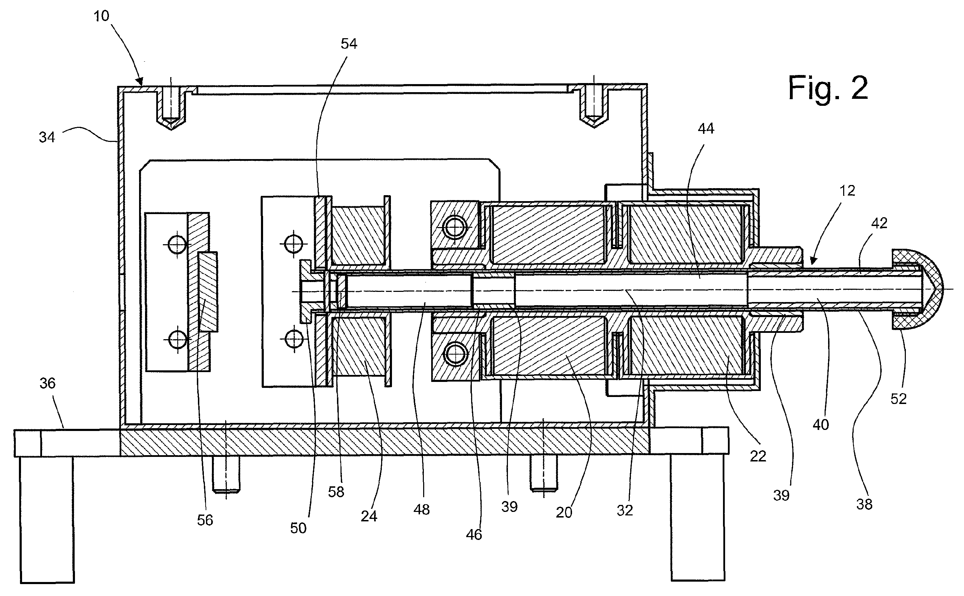

Die nachstehend näher erläuterte Abtastvorrichtung 10 weist in dem Beispiel nach Fig. 2 zwei Antriebsspulen 20, 22 für eine Vorschub- und Rückbewegung des Taststößels 12 und eine Messspule 24 zur Erfassung der Tastbewegung auf. Die Drucküberprüfung basiert darauf, dass die Messung des Prallverhaltens des gleichsam "freifliegend" auf den Behälter 14 geschossenen Taststößels 12 präzisen Aufschluss über den die Verformbarkeit beeinflussenden Innendruck des Behälters 14 gibt.

Die Messeinrichtung 16 umfasst einen Signalprozessor 26 zur Verarbeitung von Messsignalen und zur Kontrolle des Messablaufs. Die Ansteuerung der Antriebsspulen 20,22 erfolgt über eine I/O-Einheit 28, während die an der Messspule 24 bzw. einem Bewegungssensor erfassten Analogsignale über einen A/D-Wandler mit einem gegebenen Zeittakt aufgezeichnet werden, so dass der Zeitverlauf der Tastbewegung durch eine Vielzahl von Messwerten bestimmt wird.

Fig. 2 zeigt einen Vertikalschnitt der Abtastvorrichtung 10 in der Längsachse 32 des Taststößels 12. Ein Gehäuse 34 auf einem Gestell 36 ermöglicht eine standfeste Positionierung in Querausrichtung der Achse 32 zur Transportrichtung der Behälter 14 in der Prüfstation. Die Antriebsspulen 20, 22 und die Messspule 24 sind koaxial zu der Achse 32 gehäusefest fixiert. Ein zentral durch die Spulen 20,22,24 durchgehendes Führungsrohr 38 bildet die Hülle des Stößelschafts 40. Das in Gleitlagern 39 linearbeweglich gelagerte Führungsrohr 38 enthält von vorne nach hinten gesehen eine nichtmagnetische erste Distanzhülse 42, einen in den Antriebsspulen 20, 22 gelagerten ersten Eisenkern 44, eine nichtmagnetische zweite Distanzhülse 46, einen in der Messspule 24 gelagerten zweiten Eisenkern 48 und einen proximalen Hubbegrenzer 50. Am vorderen Ende der ersten Distanzhülse 42 ist ein metallischer Tastkopf 52 aufgeschraubt, der mit seiner konvex gerundeten Vorderfläche ein punktuelles Eindrücken der Behälterwand ohne Beschädigung ermöglicht. Der am hinteren Schaftende als Bund radial überstehende Hubbegrenzer 50 schlägt zur Begrenzung des Vorwärtsbewegung gegen einen Anschlag 54 an der Messspule 24 und zur Begrenzung der Rückholbewegung an einem gehäusefesten Dämpfer 56 an.

Um die Eigenbewegung des Taststößels 12 während dessen Tastbewegung detektieren zu können, ist ein Permanentmagnetstück 58 am hinteren Endabschnitt des Stößelschafts 40 in magnetisch leitender Verbindung mit dem zweiten Eisenkern 48 als Sensorelement fest integriert. Die Anordnung aus Permanentmagnetstück 58 und Eisenkern 48 bewegt sich bei der Tastbewegung in der ortsfesten Messspule 24 und induziert dabei eine als analoges Messsignal abgreifbare elektrische Spannung, die proportional zur Geschwindigkeit bei der Tastbewegung ist.

Beim Betrieb der Abtastvorrichtung 10 wird der Taststößel 12 durch Bestromung der Antriebsspule 22 gegen den Behälter 14 beschleunigt, wobei der Eisenkern 32 in das Zentrum der Spule 22 gezogen wird, wo die magnetische Flussdichte am höchsten ist. Noch vor dem Kontakt des Tastkopfes 52 mit dem Behälter 14 wird der Spulenstrom abgeschaltet, so dass der Taststößel 12 frei von Antriebskräften mit gleichförmiger Geschwindigkeit die verbleibende Restdistanz überbrückt. Beim anschließenden Aufprall wird die flexible Seitenwand des Behälters 14 in Abhängigkeit vom Innendruck durch den Taststößel 12 nach innen eingedrückt, bis der Umkehrpunkt erreicht ist und die Tastbewegung aufgrund der elastischen Reaktionskraft des Behälters 14 wieder umgekehrt wird. Der Verlauf dieses Bewegungsvorgangs kann durch die an der Messspule 24 abgegriffenen Induktionssignale des Permanentmagnetstücks 58 mittels des Signalprozessors 26 aufgezeichnet und ggf. mittels der über ein Netzwerk 60 verbundenen Bedieneinheit 18 weiter ausgewertet werden, um fehlerhafte Behälter aus der Transportstrecke der Abfüllanlage auszusondern. Zur Bereitstellung in der Ausgangsposition kann der Taststößel durch Einschalten der in Rückholrichtung wirkenden zweiten Antriebsspule 20 zurückgezogen werden, bis der Hubbegrenzer 50 an dem Dämpfer 56 anschlägt. Der gesamte Vorgang lässt sich mit hoher Frequenz wiederholen, so dass auch bei schnellem Transport der Behälter 14 ein zuverlässiger Prüfbetrieb gewährleistet ist.

Fig. 3 zeigt Geschwindigkeitsdiagramme der Tastbewegung für einen Behälter 14 mit 0,5 bar (Fig. 3a) und 1,5 bar (Fig. 3b) Behälterinnendruck. Als Maß für die Geschwindigkeit des Taststößels 12 ist die an der Messspule 24 abgegriffene Spannung U in willkürlichen Einheiten über der Zeit t in Millisekunden, wobei die im Folgenden erläuterten Zeitpunkte t0 bis t6 gesondert markiert sind. Bei t0 erfolgt mit der Ansteuerung der ersten Antriebsspule 22 der Aufzeichnungsbeginn. Zum Zeitpunkt t1 bei etwa 10 ms wird die Spule 22 wieder abgeschaltet und der Taststößel 12 bewegt sich antriebsfrei weiter. Auf dem erreichten wird bei t2 ein Auswertefenster geöffnet, das am Ende des Messvorgangs bei t6 wieder geschlossen wird. Innerhalb dieses Auswertefensters lässt sich das Auftreffen auf den Behälter 14 bzw. das Messobjekt anhand des steilen Kurvenabfalls zuverlässig erkennen. Im Nulldurchgang bei t4 erfolgt die Bewegungsumkehr, wobei auch hier das Abheben des Taststößels 12 vom Behälter 14 aufgrund des unstetigen Übergangs in das untere Geschwindigkeitsplateau problemlos nachweisbar ist. Als Maß für den Behälterinnendruck kann der Kehrwert des Zeitintervalls t5 - t3 bestimmt werden. Alternativ kann der Druck im Behälterinneren aus der Kurvensteigung, d.h. der Verzögerung und Beschleunigung des Taststößels 12 im Zeitintervall t3 bis t5 abgeleitet werden. Denkbar ist es auch, den Geschwindigkeitsverlauf zu integrieren, um aus den so erhaltenen Wegdaten über die Eindringtiefe des Taststößels 12 zumindest ein qualitatives Maß für den Innendruck zu gewinnen.

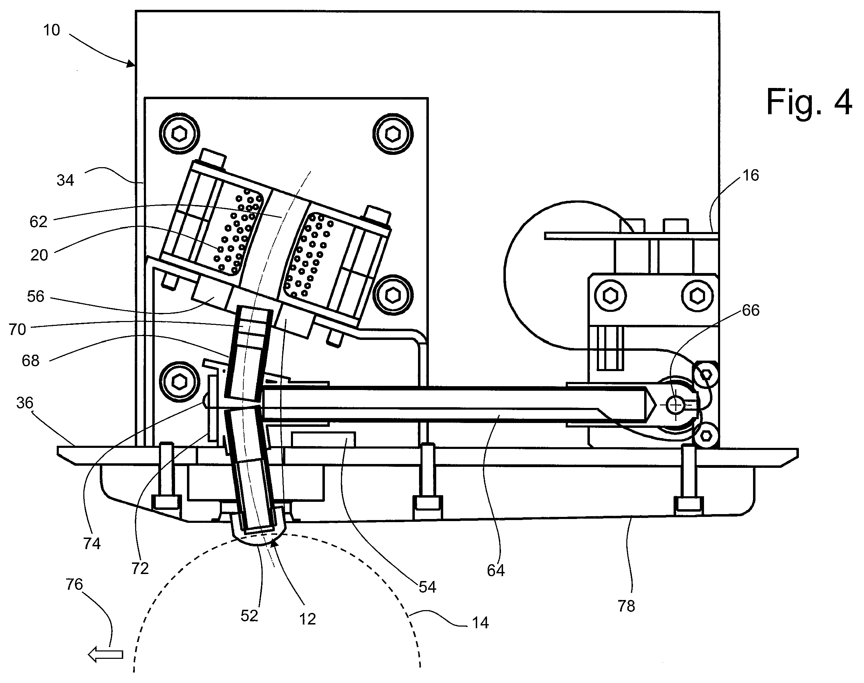

Bei der in Fig. 4 gezeigten Ausführungsform sind gleich oder ähnliche Teile mit denselben Bezugszeichen wie vorstehend beschrieben versehen. Ein besonderer Unterschied besteht darin, dass der Taststößel 12 nicht linearbeweglich, sondern entlang der Kreisbahn 62 in einer Horizontalebene schwenkbeweglich ist. Hierfür ist der Taststößel 12 an einem Ende eines Schwenkarms 64 gehalten, der an seinem anderen Ende in einem Schwenklager 66 gelagert ist. Für einen hin- und hergehenden Stößelantrieb ist eine umpolbare gehäusefeste Spule 20 in Kombination mit einem stößelfesten Magnetträger 68 und darin befindlichen Permanentmagneten 70 vorgesehen. Ein weiterer Unterschied besteht darin, dass anstelle einer induktiven Bewegungserfassung ein Beschleunigungssensor 72 eingesetzt wird. Der Sensor 72 ist durch einen integrierten elektronischen Baustein gebildet, der fest an einem Träger des Stößels 12 angebracht ist und über eine Leitung 74 mit Betriebsspannung versorgt wird. Am lagerseitigen Ende des Schwenkarms 64 ist die Leitung 74 über ein flexibles Kabel zu der Platine der Messeinrichtung 16 geführt. Somit lassen sich Messsignale auch während der Bewegung übertragen. Der Beschleunigungssensor 72 gibt bei Bewegungsänderung ein analoges Spannungssignal aus, das in Abhängigkeit von der Zeit aufgezeichnet wird. Durch Integration der Messwerte lässt sich auch die Geschwindigkeit bzw. der Schwenkweg zeitabhängig ermitteln.

In Fig. 4 ist die Umfangskontur eines unverformten Behälters 14, z.B. einer unter Druck stehenden PET-Flasche ausschnittsweise angedeutet. Der Behälter 14 bewegt sich auf einem Transporteur in Richtung des Pfeils 76 und wird dabei umfangsseitig entlang der Führungsschräge 78 in die bogenförmige Bewegungsbahn 62 des Taststößels 12 geführt. Dessen Vorwärts- bzw. Tastbewegung wird dabei durch eine geeignet positionierte Lichtschranke (nicht gezeigt) ausgelöst. Dabei wird die Behälterwand abhängig vom Innendruck deformiert. Bei einem vergleichsweise harten Behälter 14 wird eine hohe Verzögerung über eine kurze Zeitdauer erfasst, während bei einem weicheren Behälter die Verzögerung kleiner ist und der Tastvorgang bis zum Stößelstillstand länger dauert.

## Patentansprüche

1. Vorrichtung zur Dichtheitskontrolle von Behältern (14), insbesondere unter Innendruck stehenden PET-Flaschen, mit einem in einer Tastbewegung in Kontakt mit einem verformbaren Behälter (14) bringbaren Tastkörper (12), einer Antriebseinheit (20,22) für den Tastkörper (12) und einer mit der Antriebseinheit (20,22) und/oder dem Tastkörper (12) gekoppelten Messeinrichtung (16) zur Bestimmung der Behälterdichtheit durch Auswertung der Tastbewegung, wobei an dem Tastkörper (12) ein zur Detektion einer Eigenbewegung angepasstes Sensorelement (58) angeordnet ist, **dadurch gekennzeichnet, dass** die Antriebseinheit (20,22) nach einer anfänglichen Antriebsphase zumindest während des Kontakts des Tastkörpers (12) mit dem Behälter (14) abgeschaltet oder von dem Tastkörper (12) entkoppelt ist, so dass der Tastkörper (12) frei von Antriebskräften gegen den Behälter (14) gelenkt wird, und dass die mit dem Sensorelement (58;72) gekoppelte Messeinrichtung (16) zur Erfassung eines Zeitverlaufs der Tastbewegung ausgebildet ist.

2. Vorrichtung nach Anspruch 1, **dadurch gekennzeichnet, dass** das Sensorelement (58) ein Permanentmagnetstück aufweist, und dass das Permanentmagnetstück mit einer Messspule (24) der Messeinrichtung (16) induktiv gekoppelt ist.

3. Vorrichtung nach Anspruch 1, **dadurch gekennzeichnet**, das das Sensorelement (72) durch einen mit dem Tastkörper (12) fest verbundenen Beschleunigungssensor gebildet ist.

4. Vorrichtung nach einem der Ansprüche 1 bis 3, **dadurch gekennzeichnet, dass** die Messeinrichtung (16) einen Signalprozessor (26) zur zeitabhängigen Erfassung des zurückgelegten Wegs und/oder der Geschwindigkeit und/oder der Beschleunigung des Tastkörpers (12) bei der Tastbewegung aufweist.

5. Vorrichtung nach einem der Ansprüche 1 bis 4, **gekennzeichnet durch** eine Auswerteeinheit (18) zur Bestimmung eines qualitativen oder quantitativen Maßes für die Behälterdichtheit aus dem Zeitverlauf der Tastbewegung.

6. Vorrichtung nach einem der Ansprüche 1 bis 5, **dadurch gekennzeichnet, dass** die Antriebseinheit (20,22) mindestens eine Antriebsspule (20) für einen elektromagnetischen Antrieb des Tastkörpers (12) aufweist.

7. Vorrichtung nach einem der Ansprüche 1 bis 6, **dadurch gekennzeichnet, dass** die Antriebseinheit (20,22) eine erste Antriebsspule für einen gegen den Behälter (14) gerichteten Vorschub des Tastkörpers (12) und eine zweite Antriebsspule für eine Rückholung des Tastkörpers (12) in seine Ausgangslage aufweist.

8. Vorrichtung nach einem der Ansprüche 1 bis 7, **dadurch gekennzeichnet, dass** der Tastkörper (12) einen in eine Antriebsspule eintauchenden ferromagnetischen Kern (44) aufweist.

9. Vorrichtung nach einem der Ansprüche 1 bis 8, **dadurch gekennzeichnet, dass** der Tastkörper (12) durch einen linear geführten Taststößel gebildet ist, der mit seinem freien Ende (52) gegen den Behälter (14) bewegbar ist.

10. Vorrichtung nach einem der Ansprüche 1 bis 9, **dadurch gekennzeichnet, dass** der Tastkörper (12) ein in einer Gleitführung gelagertes, nichtmagnetisches Führungsrohr (38) aufweist.

11. Vorrichtung nach einem der Ansprüche 1 bis 10, **dadurch gekennzeichnet, dass** der Tastkörper (12) über einen Dreharm (64) in einem Drehlager (66) schwenkbar angeordnet ist.

12. Vorrichtung nach einem der Ansprüche 1 bis 11, **dadurch gekennzeichnet, dass** der Bewegungsbereich des Tastkörpers (12) durch mindestens einen Endanschlag (54,56) begrenzt ist.

13. Verfahren zur Dichtheitskontrolle von Behältern (14), insbesondere unter Innendruck stehenden PET-Flaschen, bei dem ein Tastkörper (12) in einer Tastbewegung in Kontakt mit einem verformbaren Behälter (14) gebracht wird, und die Behälterdichtheit durch Auswertung der Tastbewegung bestimmt wird, **dadurch gekennzeichnet, dass** die Antriebseinheit (20,22) nach einer anfänglichen Antriebsphase zumindest während des Kontakts des Tastkörpers (12) mit dem Behälter (14) abgeschaltet oder von dem Tastkörper (12) entkoppelt ist, so dass der Tastkörper (12) frei von Antriebskräften gegen den Behälter (14) gelenkt wird, und dass ein Zeitverlauf der Tastbewegung durch ein an dem Tastkörper (12) angeordnetes Sensorelement (58) und eine mit dem Sensorelement (58) gekoppelte Messeinrichtung (16) erfasst wird, wobei durch Auswertung des Zeitverlaufs ein Maß für die Behälterdichtheit bestimmt wird.

14. Verfahren nach Anspruch 13, **dadurch gekennzeichnet, dass** der Tastkörper (12) in einer linearen oder zirkularen Bahn gegen den Behälter (14) bewegt wird.

## Claims

1. A device for checking the leak tightness of containers (14), in particular PET bottles under internal pressure, comprising a probe (12) that can be brought into contact with a deformable container (14) in a probing movement, a drive unit (20, 22) for the probe (12) and a measuring device (16) coupled to the drive unit (20, 22) and/or the probe (12) for determining the container leak tightness by evaluating the probing movement, wherein on the probe (12) there is arranged a sensor element (58) adapted for the detection of a movement of the probe itself, **characterized in that** the drive unit (20, 22) after an initial drive phase is switched off or decoupled from the probe (12) at least during the contact of the probe (12) with the container (14), so that the probe (12) is directed against the container (14) without any driving forces, and **in that** the measuring device (16) coupled to the sensor element (58; 72) is designed for detecting a course of the probing movement over time.

2. The device as claimed in claim 1, **characterized in that** the sensor element (58) has a piece of permanent magnet, and **in that** the piece of permanent magnet is inductively coupled to a measuring coil (24) of the measuring device (16).

3. The device as claimed in claim 1, **characterized in that** the sensor element (72) is formed by an acceleration sensor fixedly connected to the probe (12).

4. The device as claimed in one of claims 1 to 3, **characterized in that** the measuring device (16) has a signal processor (26) for the time-dependent detection of the displacement covered and/or the speed and/or the acceleration of the probe (12) during the probing movement.

5. The device as claimed in one of claims 1 to 4, **characterized by** an evaluation unit (18) for determining a qualitative or quantitative measure of the container leak tightness from the course of the probing movement over time.

6. The device as claimed in one of claims 1 to 5, **characterized in that** the drive unit (20, 22) has at least one drive coil (20) for an electromagnetic drive of the probe (12).

7. The device as claimed in one of claims 1 to 6, **characterized in that** the drive unit (20, 22) has a first drive coil for an advancement of the probe (12), directed toward the container (14), and a second drive coil for a retraction of the probe (12) into its starting position.

8. The device as claimed in one of claims 1 to 7, **characterized in that** the probe (12) has a ferromagnetic core (44) that enters a drive coil.

9. The device as claimed in one of claims 1 to 8, **characterized in that** the probe (12) is formed by a linearly guided probe pin, which can be moved with its free end (52) against the container (14).

10. The device as claimed in one of claims 1 to 9, **characterized in that** the probe (12) has a non-magnetic guide tube (38) mounted in a sliding guide.

11. The device as claimed in one of claims 1 to 10, **characterized in that** the probe (12) is arranged pivotably by way of a pivoting arm (64) in a pivot bearing (66).

12. The device as claimed in one of claims 1 to 11, **characterized in that** the range of movement of the probe (12) is limited by at least one end stop (54, 56).

13. Method for checking the leak tightness of containers (14), in particular PET bottles under internal pressure, in which a probe (12) is brought into contact with a deformable container (14) in a probing movement, and the container leak tightness is determined by evaluating the probing movement, **characterized in that** the drive unit (20, 22) after an initial drive phase is switched off or decoupled from the probe (12) at least during the contact of the probe (12) with the container (14), so that the probe (12) is directed against the container (14) without any driving forces, and that a course of the probing movement over time is detected by a sensor element (58) arranged on the probe (12) and a measuring device (16) coupled to the sensor element (58), wherein a measure of the container leak tightness is determined by evaluating the course over time.

14. The method as claimed in claim 13, **characterized in that** the probe (12) is moved against the container (14) in a linear or circular path.

## Revendications

1. Dispositif destiné à un contrôle d'étanchéité de récipients (14), en particulier de bouteilles en PET sous pression intérieure, avec un corps de palpage (12) pouvant être mis en contact avec un récipient déformable (14) lors d'un mouvement de palpage, une unité d'entraînement (20, 22) destinée au corps de palpage (12) et un appareil de mesure (16), couplé à l'unité d'entraînement (20, 22) et/ou au corps de palpage (12), destiné à déterminer l'étanchéité de récipient grâce à une interprétation du mouvement de palpage, dans lequel un élément formant capteur (58), conçu pour une détection d'un mouvement propre, est agencé sur le corps de palpage (12), **caractérisé en ce que** l'unité d'entraînement (20, 22) est arrêtée, ou est désaccouplée du corps de palpage (12), après une phase d'entraînement initiale au moins pendant le contact du corps de palpage (12) avec le récipient (14), de telle manière que le corps de palpage (12) est orienté contre le récipient (14) de manière indépendante des forces d'entraînement, et l'appareil de mesure (16) couplé à l'élément formant capteur (58 ; 72) est réalisé en vue d'une détection d'un déroulement temporel du mouvement de palpage.

2. Dispositif selon la revendication 1, **caractérisé en ce que** l'élément formant capteur (58) présente un aimant permanent, et l'aimant permanent est couplé par induction à une bobine de mesure (24) de l'appareil de mesure (16).

3. Dispositif selon la revendication 1, **caractérisé en ce que** l'élément formant capteur (72) est formé d'un capteur d'accélération relié fixe au corps de palpage (12).

4. Dispositif selon l'une quelconque des revendications 1 à 3, **caractérisé en ce que** l'appareil de mesure (16) présente un processeur de signal (26) destiné à une détection, temporellement dépendante, du trajet parcouru et/ou de la vitesse et/ou de l'accélération du corps de palpage (12) lors du mouvement de palpage.

5. Dispositif selon l'une quelconque des revendications 1 à 4, **caractérisé par** une unité d'interprétation (18) destinée à déterminer une mesure qualitative ou quantitative de l'étanchéité de récipient à partir du déroulement temporel du mouvement de palpage.

6. Dispositif selon l'une quelconque des revendications 1 à 5, **caractérisé en ce que** l'unité d'entraînement (20, 22) présente au moins une bobine d'entraînement (20) pour un entraînement électromagnétique du corps de palpage (12).

7. Dispositif selon l'une quelconque des revendications 1 à 6, **caractérisé en ce que** l'unité d'entraînement (20, 22) présente une première bobine d'entraînement pour un déplacement, dirigé à l'encontre du récipient (14), du corps de palpage (12) et une deuxième bobine d'entraînement pour un rappel du corps de palpage (12) dans sa position initiale.

8. Dispositif selon l'une quelconque des revendications 1 à 7, **caractérisé en ce que** le corps de palpage (12) présente un noyau ferromagnétique (44) plongeant dans une bobine d'entraînement.

9. Dispositif selon l'une quelconque des revendications 1 à 8, **caractérisé en ce que** le corps de palpage (12) est formé d'un coulisseau de palpage guidé de manière linéaire, dont l'extrémité libre (52) peut être déplacée contre le récipient (14).

10. Dispositif selon l'une quelconque des revendications 1 à 9, **caractérisé en ce que** le corps de palpage (12) présente un tube de guidage (38) non magnétique, positionné dans une glissière.

11. Dispositif selon l'une quelconque des revendications 1 à 10, **caractérisé en ce que** le corps de palpage (12) est agencé pivotant dans un coussinet de pivotement (66) par l'intermédiaire d'un bras pivotant (64).

12. Dispositif selon l'une quelconque des revendications 1 à 11, **caractérisé en ce que** le secteur de déplacement du corps de palpage (12) est limité grâce à au moins une butée d'extrémité (54, 56).

13. Procédé destiné à un contrôle d'étanchéité de récipients (14), en particulier de bouteilles en PET sous pression intérieure, dans lequel un corps de palpage (12) est mis en contact avec un récipient déformable (14) lors d'un mouvement de palpage, et l'étanchéité de récipient est déterminé grâce à une interprétation du mouvement de palpage, **caractérisé en ce que** l'unité d'entraînement (20, 22) est arrêtée, ou est désaccouplée du corps de palpage (12), après une phase d'entraînement initiale au moins pendant le contact du corps de palpage (12) avec le récipient (14), de telle manière que le corps de palpage (12) est orienté contre le récipient (14) de manière indépendante des forces d'entraînement, et un déroulement temporel du mouvement de palpage est détecté grâce à un élément formant capteur (58) agencé au niveau du corps de palpage (12) et grâce à un appareil de mesure (16) couplé à l'élément formant capteur (58), dans lequel une mesure de l'étanchéité de récipient est déterminée grâce à une interprétation du déroulement temporel.

14. Procédé selon la revendication 13, **caractérisé en ce que** le corps de palpage (12) est déplacé à l'encontre du récipient (14) selon un trajet linéaire ou circulaire.
